# EUROPEAN PATENT APPLICATION

(11) **EP 4 636 225 A1**
(43) Date of publication of application: **22.10.2025**
(21) Application number: 25169223.2
(22) Date of filing: 08.04.2025
(51) Int. Cl.: F01D 15/10, F01D 25/36

(54) **DIRECT DRIVE WITH ELECTRIC MACHINE INTEGRATED LOW SPOOL SHAFT FOR HYBRID ENGINE**

(30) Priority: 08.04.2024 US 202418629754
(71) Applicant: RTX Corporation, Farmington, CT 06032 (US)
(72) Inventor: CHOE, Jung Muk, Glastonbury, 06033 (US); CLARK, Thomas E., Wells, 04090 (US); MERCIER, Claude, Vernon, 06066 (US); SOLOMONIDES, Jason B., Cromwell, 06416 (US)
(74) Representative: Dehns

(57) **Abstract**

An electric machine (200) includes a rotor (204) and a stator (202). The rotor (204) is integrated into a fan drive gear system (201) in an engine. The stator (202) is configured to provide a magnetic field to rotate the rotor (204).

## Description

### TECHNICAL FIELD

This disclosure relates generally to hybrid engine devices and processes. More specifically, this disclosure relates to a direct drive with motor rotor integrated low spool shaft for a hybrid engine.

### BACKGROUND

Hybrid engine design requires additional motor connections which increases weight and complexity of the accessory gear box. A permanent magnet synchronous motor (PMSM) needs extra cooling to prevent demagnetization and increases weight of the thermal management system (TMS). Also, the PMSM cannot turn off the output due to back electromagnetic force (EMF) when the PMSM is rotated. The uncontrolled back EMF voltage of the PMSM could bring an over voltage fault and a high winding short circuit current.

### SUMMARY

This disclosure provides a direct drive with an electrical machine rotor integrated in the low spool of the turbine engine for a hybrid electric engine.

According to an aspect of the present invention, there is provided an electric machine that includes a rotor and a stator. The rotor is integrated into a fan drive gear system for an engine (e.g. near a fan hub in the engine). The stator is configured to provide a magnetic field to rotate the rotor. This aspect of the invention may extend to a fan drive assembly for an engine (e.g. a gas turbine engine) comprising the electric machine and the fan drive gear system.

Optionally, and in accordance with the above, the stator is integrated in a static reference frame (or static structure or static section of the engine) in a bearing compartment.

Optionally, and in accordance with any of the above, the stator is integrated to the bearing compartment, such as the forward bearing compartment.

Optionally, and in accordance with any of the above, the rotor is integrated to a gear ring of the fan drive gear system.

Optionally, and in accordance with any of the above, the stator is integrated in a rotating reference frame (or rotating structure or rotating section of the engine).

Optionally, and in accordance with any of the above, the stator is integrated to a fan hub shaft of the fan drive gear system.

Optionally, and in accordance with any of the above, the rotor is integrated to a sun gear of the fan drive gear system.

Optionally, and in accordance with any of the above, the electric machine further includes power feeder cables routed through a front center body and a forward bearing compartment to power the stator.

Optionally, and in accordance with any of the above, the electric machine further includes at least one slip ring configured to guide and secure the power feeder cables around a low spool shaft.

Optionally, and in accordance with any of the above, the electric machine further includes an exciter configured to transfer power from the power feeder cables to the rotor.

According to another aspect of the present invention, there is provided a gas turbine engine that comprises a fan drive gear system and an electric machine (e.g. an induction motor). The electric machine includes a rotor and a stator. The rotor is integrated into the fan drive gear system. The stator is configured to provide a magnetic field to rotate the rotor.

Optionally, and in accordance with any of the above, the stator is integrated in a static reference frame in a bearing compartment.

Optionally, and in accordance with any of the above, the stator is integrated to the bearing compartment, such as a forward bearing compartment.

Optionally, and in accordance with any of the above, the rotor is integrated to a gear ring of the fan drive gear system.

Optionally, and in accordance with any of the above, the stator is integrated in a rotating reference frame.

Optionally, and in accordance with any of the above, the stator is integrated to a fan hub shaft of the fan drive gear system.

Optionally, and in accordance with any of the above, the rotor is integrated to a sun gear of the fan drive gear system.

Optionally, and in accordance with any of the above, the gas turbine engine further includes power feeder cables routed through a front center body and a forward bearing compartment to power the stator.

Optionally, and in accordance with any of the above, the gas turbine engine includes at least one slip ring configured to guide and secure the power feeder cables around a low spool shaft.

Optionally, and in accordance with any of the above, the gas turbine engine further includes an exciter configured to transfer power from the power feeder cables to the rotor.

Other technical features may be readily apparent to one skilled in the art from the following figures, descriptions, and claims.

### BRIEF DESCRIPTION OF THE DRAWINGS

For a more complete understanding of this disclosure, reference is made to the following description, taken in conjunction with the accompanying drawings, in which:
FIGURE 1 illustrates an example gas turbine engine in accordance with this disclosure; and
FIGURES 2 through 5 illustrate example electric machines in accordance with this disclosure.

### DETAILED DESCRIPTION

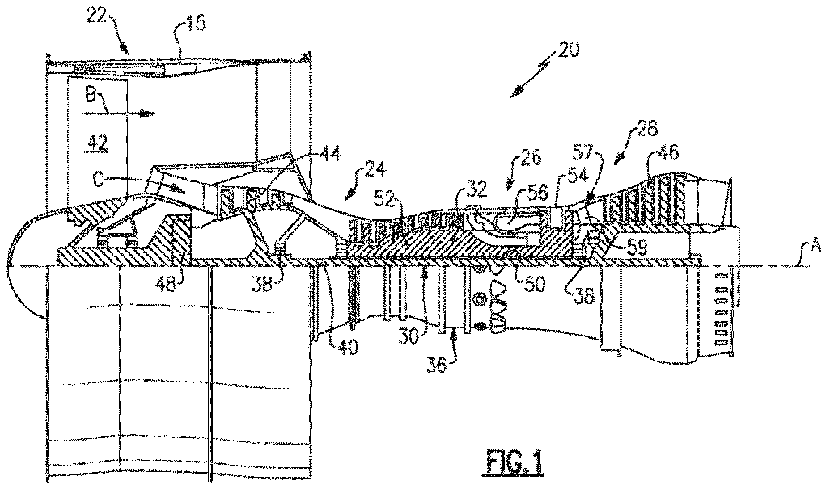

FIGURES 1 through 5, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

For a demonstrator engine with a low spool mounted PMSM, which increases weight and complexity. PMSM needs extra cooling to prevent demagnetization that increases weight due to the increased complexity of the thermal management system (TMS). The PMSM cannot turn off output voltage due to back EMF when it is rotated, which creates a risk of back feeding voltage is a critical safety concern.

The envisioned design of the hybrid engine integrates the electric machine in front of the engine where the environmental temperatures are lower and does not require the complexity of an electric machine gearbox. The design also allows for a modular motor, such as a separated stator module which makes maintenance easier, and can save space based on the fan hub placement. The proposed electric machines are a squirrel cage induction machine, a wound rotor induction machine, and an SRM, which does not have a magnet. These electric machines allow for a safe way to turn off the electrical output, which improves safety. The robust form of the squirrel cage induction machine and the SRM rotor characteristic provides for high temperature, harsh environment, no cooling or minimum cooling, and no gear box.

FIGURE 1 illustrates an example gas turbine engine 20 in accordance with this disclosure. As shown in FIGURE 1, the gas turbine engine 20 is disclosed herein as a twospool turbofan that generally incorporates a fan section 22, a compressor section 24, a combustor section 26 and a turbine section 28. Alternative engines might include an augmentor section among other systems or features. The fan section 22 drives air along a bypass flow path B in a bypass duct inwardly of a nacelle 15. The compressor section 24 receives air along a core flow path C for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines including three-spool architectures.

The engine 20 generally includes a low-speed spool 30 and a high-speed spool 32 mounted for rotation about an engine central longitudinal axis A relative to an engine static structure 36 via several bearing systems 38. It should be understood that various bearing systems 38 at various locations may alternatively or additionally be provided.

The low-pressure spool 30 generally includes an inner shaft 40 that interconnects a fan 42, a low-pressure compressor 44 and a low-pressure turbine 46. The inner shaft 40 is connected to the fan 42, directly or through a geared architecture 48 to drive the fan 42 at a lower speed than the low-speed spool 30. The high-pressure spool 32 includes an outer shaft 50 that interconnects a high-pressure compressor 52 and high-pressure turbine 54. A combustor 56 is arranged between the high-pressure compressor 52 and the high-pressure turbine 54. A mid-turbine frame 57 of the engine static structure 36 is arranged generally between the high-pressure turbine 54 and the low-pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low-pressure compressor 44 then the high-pressure compressor 52, mixed and burned with fuel in the combustor 56, then expanded over the high-pressure turbine 54 and low-pressure turbine 46. The mid-turbine frame 57 includes airfoils 59 which are in the core airflow path. The turbines 46, 54 rotationally drive the respective low speed spool 30 and high-speed spool 32 in response to the expansion.

The engine 20 in one example is a high-bypass geared aircraft engine. In a further example, the engine 20 bypass ratio is greater than about six (6), with an example embodiment being greater than ten (10), the geared architecture 48 is an epicyclic gear train, such as a planetary gear system or other gear system, with a gear reduction ratio of greater than about 2.3 and the low-pressure turbine 46 has a pressure ratio that is greater than about 5. In one disclosed embodiment, the engine 20 bypass ratio is greater than about ten (10:1), the fan diameter is significantly larger than that of the low pressure compressor 44, and the low pressure turbine 46 has a pressure ratio that is greater than about 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.5:1. It should be understood, however, that the above parameters are only exemplary of one embodiment of a geared architecture engine and that the present invention is applicable to other gas turbine engines including direct drive turbofans.

Although FIGURE 1 illustrates a gas turbine engine 20, various changes may be made to FIGURE 1. For example, various components in FIGURE 1 may be combined, further subdivided, replicated, omitted, or rearranged and additional components may be added according to particular needs.

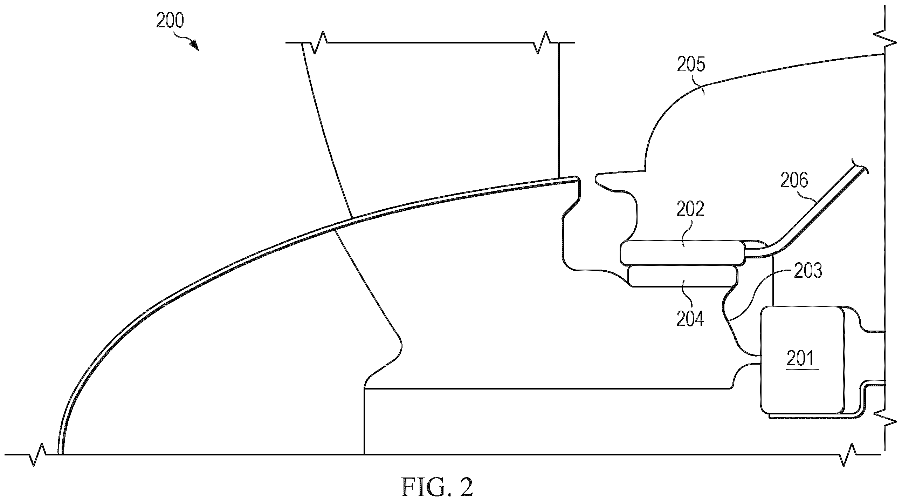

FIGURES 2 through 5 illustrate an example electric machines 200, 300, 400, and 500 in accordance with this disclosure. Electric machines can include squirrel cage induction machine, a wound rotor induction machine, SRM, etc.

As shown in FIGURE 2, a portion of a gas turbine engine, such as, but not limited to, gas turbine engine 20 of FIGURE 1 is shown having an electric machine 200. The electric machine 200 can be a squirrel cage induction machine switched reluctance motor. The electric machine 200 does not utilize magnets. The electric machine 200 does not utilize a gear box connection. The electric machine 200 has stator 202 and rotor 204. The electric machine 200 is an alternating current (AC) motor that causes the rotor 204 to rotate through an electromagnetic induction from a magnetic field from the stator 202. The electric machine 200 including the stator 202 and the rotor 204 can be removable with the fan drive gear system 201.

The stator 202 is a stationary part of the electric machine 200. The stator 202 can have a plurality of electric machine stator windings to control electromechanical power transfer. The stator 202 has windings integrated to a forward bearing compartment 205, which is in a stationary reference frame. The stator 202 can be connected to an alternating current power source, such as through the power cables 206.

The rotor 204 is the rotating component of the electric machine 200. The rotor 204 can have a plurality of induction motor stator windings to convert mechanical energy to electrical energy. The rotor 204 can be integrated into a sun gear 203 of a fan drive gear system 201. The rotor 204 does not need a power source to rotate. The rotor 204 can be a squirrel-cage rotor.

Power cables 206 can provide power to the stator 202. The power cables 206 can be routed through a front center body, and a forward bearing compartment 205. The power cables 206 provided in this manner allow for the static reference frame.

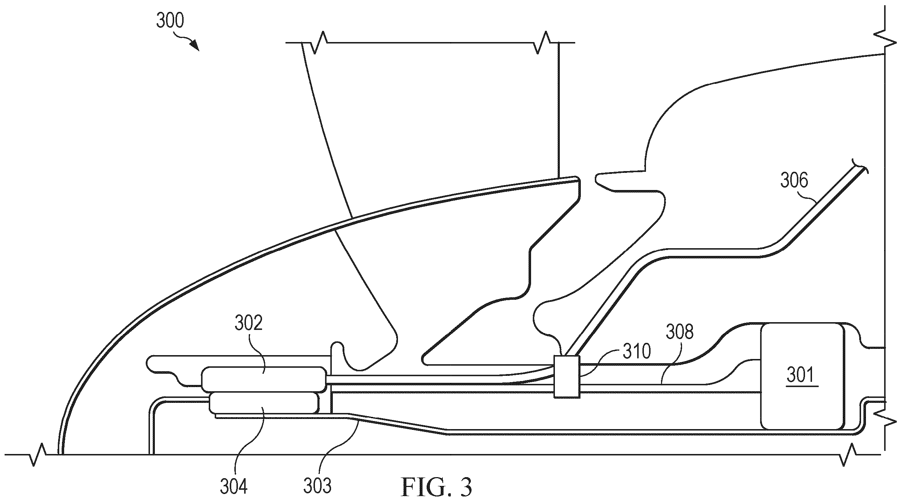

As shown in FIGURE 3, a portion of a gas turbine engine, such as, but not limited to, gas turbine engine 20 of FIGURE 1 is shown having an electric machine 300. The electric machine 300 can be a squirrel cage induction machine switched reluctance motor. The electric machine 300 does not utilize magnets. The electric machine 300 does not utilize a gear box connection. The electric machine 300 has stator 302 and rotor 304. The electric machine 300 is an alternating current that causes the rotor 304 to rotate through an electromagnetic induction from a magnetic field from the rotation of the stator 302. The electric machine 300 including the stator 302 and the rotor 304 can be removable with the fan drive gear system 301.

The stator 302 is a stationary part of the electric machine 300. The stator 302 can have a plurality of electric machine stator windings to control electromechanical power transfer and is affixed to the fan hub 308. The stator 302 has windings integrated to a fan hub shaft 308, which is in a rotating reference frame. The stator 302 can be connected to an alternating current power source, such as through the power cables 306.

The rotor 304 is the rotating component of the electric machine 300. The rotor 304 can have a plurality of induction motor stator windings to convert mechanical energy to electrical energy. The rotor 304 can be integrated into a sun gear 303 of the fan drive gear system 301. The rotor 304 does not need a power source to rotate. The rotor 304 can be a squirrel-cage rotor or SRM rotor.

Power cables 306 can provide power to the stator 302. The power cables 306 can be routed through a front center body, a forward bearing compartment, and one or more hub shaft slip ring(s) 310. The power cables 306 provided in this manner allow for the rotating reference frame.

The slip ring(s) 310 can rotate with fan hub shaft 308. The slip ring(s) 310 allows the transmission of power and electrical signals from a stationary to a rotating structure. The slip ring(s) 310 may take the form of a spring-loaded carbon ring or block that is in contact with the fan hub shaft 308.

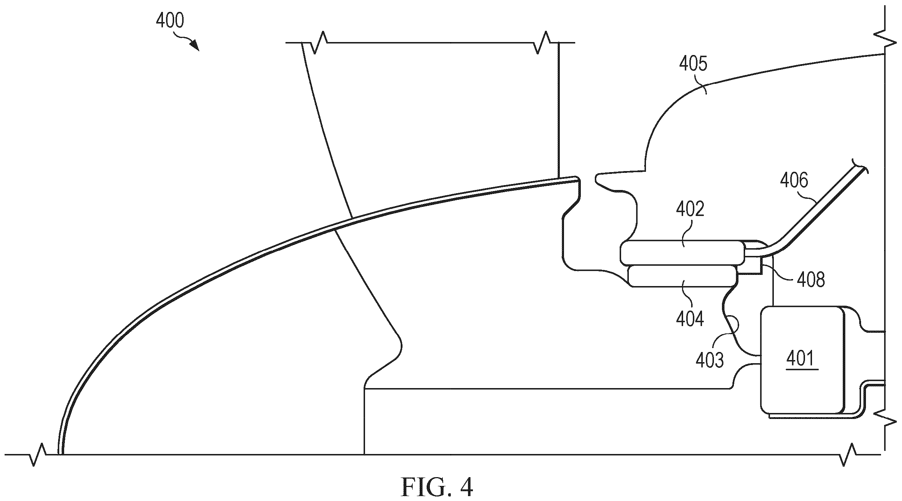

As shown in FIGURE 4, the electric machine 400 includes components 401-406, which are similar to the components 201-206 shown in FIGURE 2. The electric machine 400 can be a wound motor induction machine. The electric machine 400 also includes an exciter 408. The exciter 408 can transfer power from the cable 406 to the rotor 404.

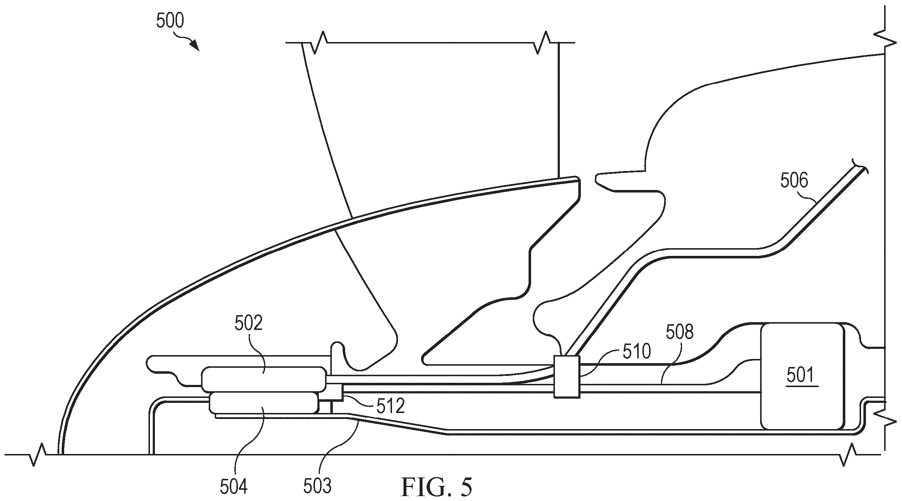

As shown in FIGURE 5, the electric machine 500 includes components 501-510, which are similar to the components 301-310 shown in FIGURE 3. The electric machine 500 can be a wound motor induction machine. The electric machine 500 also includes an exciter 512. The exciter 512 can transfer power from the cable 506 to the rotor 504.

Although FIGURES 2 through 5 illustrate example induction motors 200, 300, 400, and 500, various changes may be made to FIGURES 2 through 5. For example, various components in FIGURES 2 through 5 may be combined, further subdivided, replicated, omitted, or rearranged and additional components may be added according to particular needs.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims..

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A fan drive assembly for a gas turbine engine, the fan drive assembly comprising:
a fan drive gear system (201;301;401;501); and
an electric machine (200;300;400;500) comprising:
a rotor (204;304;404;504) integrated into the fan drive gear system (201... 501); and
a stator (202;302;402;502) configured to provide a magnetic field to rotate the rotor (204...504).

2. The fan drive assembly of claim 1, wherein the stator (202;402) is integrated in a static reference frame of a bearing compartment (205;405).

3. The fan drive assembly of claim 2, wherein the stator (202;402) is integrated to the bearing compartment (205;405).

4. The fan drive assembly of claim 1, 2 or 3, wherein the rotor (20...504) is integrated to a ring gear of the fan drive gear system (201;401).

5. The fan drive assembly of claim 1, wherein the stator (302;502) is integrated in a rotating reference frame.

6. The fan drive assembly of claim 5, wherein the stator (302;502) is integrated to a fan hub shaft (308;508) of the fan drive gear system (301;501).

7. The fan drive assembly of claim 5 or 6, wherein the rotor (304;504) is integrated to a sun gear (303;503) of the fan drive gear system (301;501).

8. The fan drive assembly of any preceding claim, further comprising power feeder cables (206;306;406;506) routed through a front center body and a or the bearing compartment (205;405) to power the stator (202...502).

9. The fan drive assembly of claim 8, further comprising at least one slip ring (310;510) configured to guide and secure the power feeder cables (306;506) around a low spool shaft (40).

10. The fan drive assembly of claim 8 or 9, further comprising an exciter (408;512) configured to transfer power from the power feeder cables (406;506) to the rotor (404;504).

11. A gas turbine engine (20) comprising the fan drive assembly of any preceding claim.
